Europäisches Patentamt

(19) European Patent Office

Office européen des brevets

(11) Publication number: **0 189 483**
**B1**

(12) **EUROPEAN PATENT SPECIFICATION**

(45) Date of publication of patent specification: **20.12.89**

(21) Application number: **85903048.8**

(22) Date of filing: **18.06.85**

(86) International application number:
**PCT/JP85/00343**

(87) International publication number:
**WO 86/00254 16.01.86 Gazette 86/02**

(51) Int. Cl.⁴: **B 25 J 9/06**, B 25 J 19/00

(54) **INDUSTRIAL ROBOT WITH ARM GRAVITY BALANCER.**

(30) Priority: **18.06.84 JP 123772/84**

(43) Date of publication of application:
**06.08.86 Bulletin 86/32**

(45) Publication of the grant of the patent:
**20.12.89 Bulletin 89/51**

(84) Designated Contracting States:
**DE FR GB**

(56) References cited:
**GB-A-2 114 536**
**JP-A-51 058 252**
**JP-A-52 079 468**
**JP-U-57 140 996**
**JP-Y-50 035 496**

(73) Proprietor: **FANUC LTD**
**3580, Shibokusa Aza-Komanba Oshino-mura**
**Minamitsuru-gun Yamanashi 401-05 (JP)**

(72) Inventor: **NAKASHIMA, Seiichiro**
**5-3-2, Hino-honcho Hino-shi**
**Tokyo 191 (JP)**
Inventor: **TOYODA, Kenichi**
**1-17-25, Shinmei Hino-shi**
**Tokyo 191 (JP)**
Inventor: **TORII, Nobutoshi**
**Fuyo Haitsu 308, 65-4, Takakura-cho Hachioji-shi**
**Tokyo 192 (JP)**
Inventor: **MIZUNO, Hitoshi**
**Fanuc Hino Shataku 307, 3-27, Tamadaira Hino-shi**
**Tokyo 191 (JP)**

(74) Representative: **Jackson, Peter Arthur et al**
**GILL JENNINGS & EVERY 53-64 Chancery Lane**
**London WC2A 1HN (GB)**

Courier Press, Leamington Spa, England.

## Description

The present invention relates to an industrial robot with arm weight balancer, and more particularly to an improved and novel industrial robot with an arm weight balancer intended to reduce variation of arm drive motor torque caused as tilt angles of vertically pivotable arms change.

Generally, an industrial robot with articulated arms has a first or lower arm supporting at an end thereof a second arm or forearm, which has a horizontally extending shaft fixed at the lower end thereof. This shaft is rotatably supported in a turning body and coupled with a drive motor. When driven by the motor, the lower arm is pivoted about the horizontal rotatable shaft and thus its upper end moves vertically. In robots of this type, when the lower arm is tilted with respect to a normal line, a moment developed around the axis of the rotatable shaft due to the weight acting upon the lower arm is applied to the motor. Since this moment changes as the lower arm is tilted, the motor torque will vary according to the tilt angle of the lower arm.

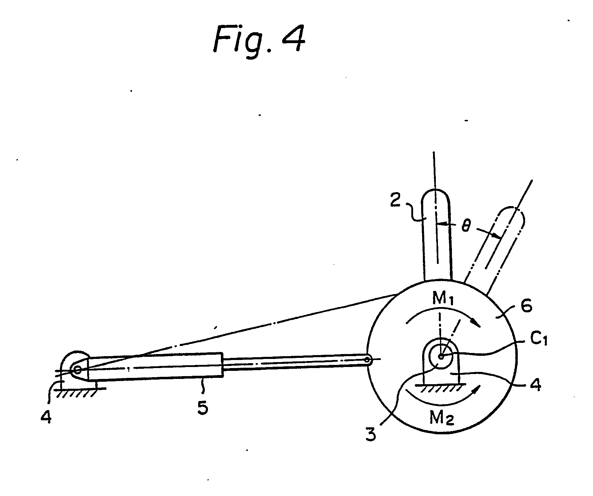

To minimize the variation of motor torque, it has been proposed to use in industrial robots a lower-arm weight balancer which creates a moment opposite to the moment developed due to the weight of the lower arm. The structure of the prior-art lower-arm weight balancer is schematically illustrated in Figure 4. As apparent from this Figure, the horizontal rotatable shaft 3 fixed in the lower end of the lower arm 2 is pivotably supported in the body 4, and coupled with the motor (not shown). One end of a tension spring 5 is connected to the turning body and the other end is connected to a plate 6 fixed to the horizontal rotatable shaft 3. When the lower arm 2 assumes a normal or vertical posture, the extension of the longitudinal axis of the tension spring 5 is perpendicular to the axis C1 of the horizontal rotatable shaft 3, and therefore the length of the tension spring 5 is at a minimum at this time.

In articulated robots of the above-mentioned structure, as the lower arm 2 is tilted about the axis C1 from the normal position, a moment M1 developed around the axis C1 due to the weight acting on the lower arm 2 is applied to the motor by means of the horizontal rotatable shaft 3, while the tension spring 5 stretches and the resilient force thereof creates a moment −M opposite in direction to the moment M1, and this is applied to the rotatable shaft 3 around the axis C1. In this case, the moment M1 developed due to the weight applied to the lower arm 2 varies in magnitude along the sin curve as the tilt angle θ of the lower arm 2 changes. More particularly, although the tilt angle θ of the lower arm 2 is relatively small, the change in magnitude of the moment M1 is relatively large, and the change rate of the moment M1 gradually becomes smaller as the tilt angle θ approximates 90 degrees. On the contrary, although the tilt angle θ of the lower arm 2 is relatively small, the change in stretching of the tension spring 5 is relatively small, and as the tilt angle θ approximates 90 degrees, the stretching rate of the tension spring 5 gradually becomes larger. Thus, although the tilt angle θ, among others, of the lower arm 2 is small, the change in magnitude of the moment −M1 corresponding to the tilt angle θ of the lower arm does not sufficiently follow up the change in magnitude of the moment M1, so the torque of the arm drive motor still varies as the tilt angle θ of the lower arm 2 changes. See also GB—A—21 14 536.

Therefore, the object of the present invention is to overcome the above-mentioned drawbacks of the prior art by providing an improved and novel industrial robot with articulated arms. The above object can be attained by providing an industrial robot with articulated arms, according to the present invention, comprising: a body, a shaft rotatably supported in the body, a drive motor for rotational drive of the rotatable shaft, a robot arm coupled at the lower end thereof to the rotatable shaft and which is so pivotable that the upper end moves vertically as the rotatable shaft is rotated, and an arm weight balancer intended to apply to the rotatable shaft a moment opposite to a moment created around the axis of the rotatable shaft due to the weight acting on the robot arm, the arm weight balancer comprising a tension spring having one end thereof coupled to the body and the other end coupled to the rotatable shaft at two points spaced from each other in the rotating direction of the rotatable shaft, the coupling points of the tension spring and the rotatable shaft taking respective symmetrical positions with respect to a straight line connecting one end of the tension spring and the axis of the rotatable shaft and equi-distant from each other on either side of the rotating direction of the rotatable shaft when the robot arm assumes a normal posture.

According to the present invention, as the robot arm is tilted forward or backward in the pivoting direction from the normal position, the tension spring is pulled by means of one of the coupling points of the tension spring and the rotatable shaft, whereby a moment opposite to a moment created due to the weight acting on the robot arm is developed around the axis of the rotatable shaft. Since the coupling points of the tension spring and the rotatable shaft are in symmetrical positions spaced equally in the rotating direction of the rotatable shaft from the straight line connecting one end of the tension spring and the center of rotation of the rotatable shaft when the robot arm assumes a normal posture, the change in stretching of the tension spring can be made relatively large when the robot arm starts tilting from the normal position. Therefore, an opposite moment which matches the change of the moment created due to the weight can be developed around the axis of the rotatable shaft, thereby reducing the variation in torque of the arm drive motor.

These and other objects and advantages of the present invention will be better understood from the following description, made by way of example, of the embodiment according to the present invention with reference to the drawings, in which:

Figure 1 is a schematic, perspective view of one embodiment of the industrial robot with articulated arms according to the present invention;

Figure 2 is a side elevation of the lower-arm weight balancer of the robot shown in Figure 1;

Figure 3 graphically shows the relationship between the tilt angle of the lower arm from the normal position and the magnitude of the moment around the axis of the rotatable shaft in the embodiment shown in Figure 1; and

Figure 4 is a schematic side elevation showing the lower-arm weight balancer in the prior-art industrial robot.

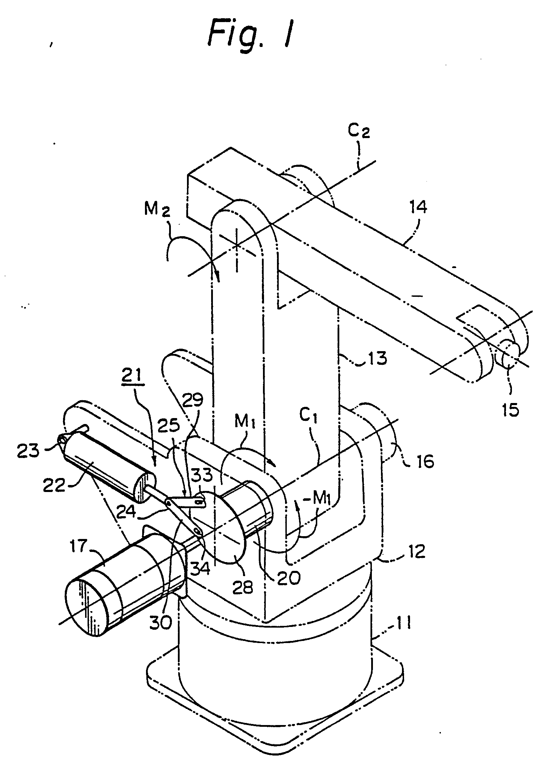

Figure 1 schematically shows the entire structure of the industrial robot with articulated arms. As apparent from this Figure, the robot comprises a fixed body 11 and a turning body 12 mounted on the fixed body 11 and rotatable about the normal axis. The lower end of a first arm, namely, a lower arm 13, is mounted on the turning body 12 and pivotable about a first horizontal axis C1. A second arm, namely, a forearm 14, is mounted on the upper end of the lower arm 13 and pivotable about a second axis C2 parallel to the first axis C1. A wrist assembly 15 is mounted at the other end of the forearm 14. A motor 16 for rotational drive of the forearm 14 and a motor 17 for rotational drive of the lower arm 13 are mounted on the turning body 12. A rotatable shaft 20 coaxial with the axis C1 is fixed at the lower end of the lower arm 13, and the lower arm 13 itself is pivotably supported in the turning body 12 by means of the rotatable shaft 20. The rotatable shaft 20 is coupled with the motor 17 by means of a reduction gear (not shown).

A moment M2 is developed around the second axis C2 due to the weight of the forearm 14 and the wrist assembly 15. As a means of creating a moment opposite to the moment M2 around the second axis C2, it was proposed to utilize, for example, the lower arm 12 and forearm 14 to form a parallelogram. By using such a means, the moment is not conveyed to the lower arm 13 on which only the weight of the forearm 14 and wrist assembly 15 will act.

When the lower arm 13 is tilted with respect to the normal line, a moment M1 will be developed around the first axis C1 due to the weight. The moment M1 changes in magnitude along a sin curve as the lower arm 13 tilts from the normal position. The moment M1 causes the torque of the motor 17 to vary. To avoid this, the robot is equipped with a lower-arm weight balancer 21 intended to develop a moment −M1 opposite to the moment M1 around the axis C1.

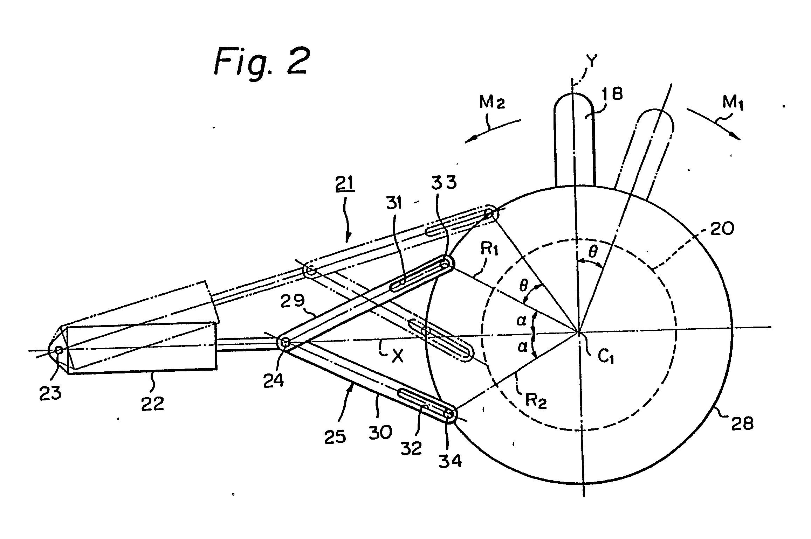

Referring to Figures 1 and 2, the lower-arm weight balancer 21 comprises a tension spring 22 having one end thereof pivotably coupled to the turning body 12 by means of a coupling pin 23. Pivotably mounted on the other end of the tension spring 22 is one end of a generally V-shaped link assembly 25, by means of a coupling pin 24. The link assembly 25 is connected to a disk 28 fixed to the rotatable shaft 20 at two points.

In the illustrated embodiment, the link assembly 25 consists of two arms 29 and 30 pivotable about the coupling pin 24. As shown in Figure 2, elongated holes 31 and 32 are formed in the arms 29 and 30, respectively, in which two engagement pins 33 and 34 provided on the disk 28 are slidably engaged, which constructs an idle coupling mechanism. As indicated by the solid line in Figure 2, when the lower arm 13 assumes a normal position, the engagement pins 33 and 34 are in symmetrical positions with respect to a straight line X connecting one end of the tension spring 22 and the axis C1 of the rotatable shaft 20, and equi-distant from each other on either side of the rotating direction of the rotatable shaft 20, and the straight lines R1 and R2 connecting the pins 33 and 34, respectively, with the axis C1 together form an acute angle α. In these positions, the pins 33 and 34 pull the tension spring 22 in a direction perpendicular to the first axis C1.

In the robot having the above-mentioned construction, when the lower arm 13 is in the normal position, the moment M1 developed around the axis C1 due to the weight acting on the forearm 14, wrist assembly 15, and lower arm 15, is zero. Also, since the resilient force of the tension spring 22 acts uniformly on the pins 33 and 34, the opposite moment −M1 created around the axis C1 by the tension spring 22 is zero.

As indicated by the dot-dash line in Figure 2, when the lower arm 13 is tilted through an angle θ with respect to the normal line Y, the moment M1 is created around the axis C1 due to the weight. On the other hand, as the lower arm 13 is tilted, the engagement pins 33 and 34 are pivoted at an angle θ from the position of an angle α along with the rotatable shaft 20. At this time, the pin 33 is engaged at the end of the elongated hole 31 of the arm 29, while the pin 34 is half-way in the elongated hole 32 of the arm 30. Therefore, the tension spring 22 is stretched as pulled only by the pin 33 by means of the arm 29, as indicated by the dot-dash line. Consequently, the tension spring 22 provides the rotatable shaft 20 with the opposite moment −M1.

As the lower arm 13 starts tilting forward or backward from the normal position, the engagement pins 33 and 34 also start rotating from the position of an angle α, together with the rotatable shaft 20, so that change in stretching of the tension spring 22 can be made relatively large while the tilt angle θ of the lower arm 13 is small. As the result, the change of the moment −M1 created due to the resilient force of the tension spring 22 can be made to match change of the moment M1 developed due to the weight.

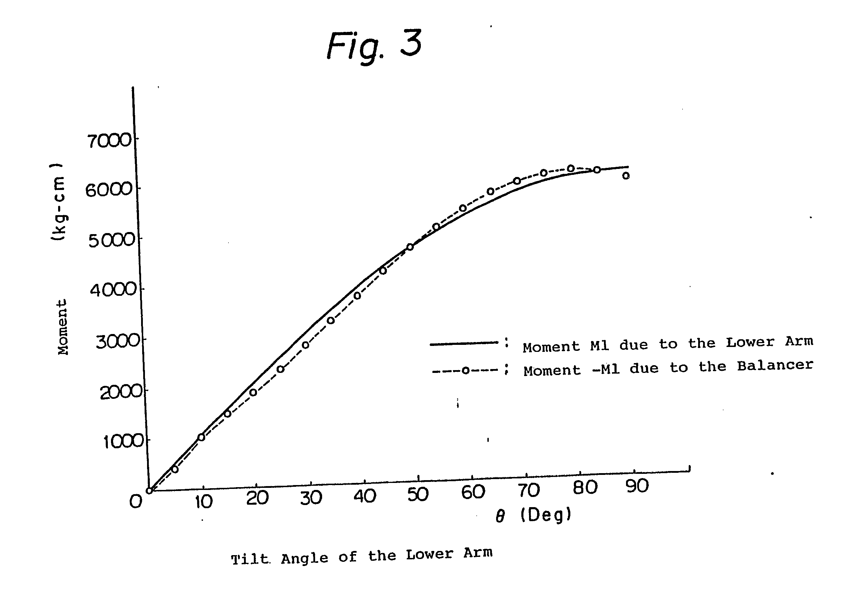

Figure 3 shows the relationship between the tilt angle θ of the lower arm 13 from the normal position and the moments M1 and −M1 in this embodiment. In this Figure, the solid-line curve indicates a change in magnitude of the moment M1 created around the axis C1 due to the weight, and the dash-line curve shows the change in magnitude of the opposite moment −M1 developed by the lower-arm weight balancer 21. In the range of the tilt angle of the lower arm 13 from zero to about 90 degrees, the moment M1 due to the weight changes in magnitude along the sin curve while the opposite moment −M1 follows the change of the moment M1, which will be evident from Figure 3.

Although one embodiment has been described in the foregoing, the present invention is not limited to only that embodiment, but can be embodied in various forms without departing from the scope of the claims which will be described later. For example, two tension springs may be coupled to the rotatable shaft by means of their respective idle coupling means. In the above-mentioned embodiment, the link assembly comprises two arms pivotably connected to each other; however, these arms may be formed integrally with each other. Further, although the rotatable shaft is fixed at the lower end of the lower arm in the above embodiment, it may be provided on the base independently of the lower arm, provided that the rotatable shaft is so coupled as to be interlocked with the lower arm.

Since the present invention permits a considerable reduction in the torque variation of the robot arm drive motor, application of the present invention to industrial robots will make it possible to provide more compact motors for use therein.

## Claims

1. An industrial robot with articulated arms, comprising:

a body (11);

a shaft (20) rotatably supported in said body;

a drive motor (17) for rotational drive of said rotatable shaft;

a robot arm (13) coupled at the lower end thereof to said rotatable shaft and so pivotable that the upper end moves vertically as said rotatable shaft is rotated; and

an arm weight balancer (21) intended for applying said rotatable shaft with a moment (M2) opposite to a moment (M1) created around the axis of said rotatable shaft due to the weight acting on said robot arm;

said arm weight balancer comprising a tension spring (22) having one end thereof coupled to said body and the other end coupled to said rotatable shaft at two points (33, 34) spaced from each other in the rotating direction of said rotatable shaft, the coupling points of said tension spring said rotatable shaft taking respective symmetrical positions with respect to a straight line connecting the one end (23) of said tension spring and the axis (C1) of said rotatable shaft and equidistant from each other on either side of the rotating direction of said rotatable shaft when the robot arm assumes a normal posture.

2. An industrial robot as set forth in Claim 1, in which the other end (24) of said tension spring (22) is coupled by means of an idle coupling means at two points spaced in the rotating direction of said rotatable shaft.

3. An industrial robot as set forth in Claim 2, in which said idle coupling means comprises a link assembly (29, 30) having elongated holes (31, 32) formed therein, and engagement pins (33, 34) which are slidably engaged in said elongated holes.

4. An industrial robot as set forth in Claim 1, in which said rotatable shaft is fixed at the lower end of said robot arm (13) assembly.

5. An industrial robot as set forth in Claim 1, in which said pivotable arm is a lower arm which supports a forearm (14) at the end thereof.

## Patentansprüche

1. Industrieller Roboter mit gelenkigen Armen, mit:

einem Körper (11);

einem drehbar im Körper gelagerten Schaft (20);

einem Antriebsmotor (17) für den Drehantrieb des drehbaren Schafts;

einem mit seinem unteren Ende mit dem drehbaren Schaft verbundenen und so schwenkbaren Robotarm, daß dessen oberes Ende sich bei Drehung des drehbaren Schaftes vertikal bewegt; und

einem Arm-Gewichtsausgleich, bestehend aus einer Zugfeder (22), deren eines Ende mit dem Körper und deren anderes Ende an zwei im Abstand zueinander in der Drehrichtung des drehbaren Schaftes angeordneten Punkten (33, 34) mit dem drehbaren Schaft verbunden ist, wobei die Anschlußpunkte der Zugfeder am drehbaren Schaft mit Bezug zu einer geraden Linie, die das eine Ende (23) der Zugfeder und die Achse (C1) des drehbaren Schaftes verbindet, jeweils symmetrische Positionen einnehmen und im gleichen Abstand zueinander zu beiden Seiten der Drehrichtung des drehbaren Schaftes angeordnet sind, wenn der Robotarm eine Normallage einnimmt.

2. Industrieller Roboter nach Anspruch 1, wobei das andere Ende (24) der Zugfeder (22) mittels einer Totweg-Kupplungsanordnung an zwei in der Drehrichtung des drehbaren Schaftes getrennten Punkten angeschlossen ist.

3. Industrieller Roboter nach Anspruch 2, dadurch gekennzeichnet, daß die Totweg-Kupplungsanordnung einen Gestängeaufbau (29, 30) umfaßt, der über in ihm angeordnete Langlöcher (31, 32) verfügt sowie über Eingriffszapfen (33, 34), die gleitend in den Langlöchern sitzen.

4. Industrieller Roboter nach Anspruch 1, dadurch gekennzeichnet, daß der drehbare Schaft am unteren Ende des Robotarmaufbaus (13) befestigt ist.

5. Industrieller Roboter nach Anspruch 1, dadurch gekennzeichnet, daß der Schwenkarm ein unterer Arm ist, der an seinem Ende einen Vorderarm (14) lagert.

## Revendications

1. Robot industriel à bras articulés, comprenant:

— un corps (11);

— un arbre rotatif (20) porté par ce corps;

— un moteur d'entraînement (17) pour faire tourner cet arbre rotatif;

— un bras de robot (13) couplé à son extrémité inférieure à cet arbre rotatif et pouvant pivoter de sorte que l'extrémité supérieure se déplace verticalement lorsque l'arbre rotatif tourne; et

— un compensateur (21) du poids du bras, destiné à appliquer à l'arbre rotatif un moment M2 opposé au moment M1 créé par rapport à l'axe de l'arbre rotatif par le poids agissant sur le bras du robot, ce compensateur du poids du bras comprenant un ressort de tension (22) ayant une de ses extrémités couplée au corps et l'autre extrémité couplée à l'arbre rotatif en deux points (33, 34) espacés l'un de l'autre dans la direction de rotation de l'arbre rotatif, les points de couplage du ressort de tension et de l'arbre rotatif prenant des positions respectives symétriques par rapport à une ligne droite reliant l'extrémité (23) du ressort de tension et l'axe (C1) de l'arbre rotatif et équidistante de l'une et de l'autre dans les deux sens respectifs de rotation de l'arbre rotatif quand le bras du robot est en position normale.

2. Robot industriel tel que décrit dans la revendication 1, dans lequel l'autre extrémité (24) du ressort de tension est couplée par l'intermédiaire de moyens de couplage libres en deux points espacés suivant la direction de rotation de l'arbre rotatif.

3. Robot industriel tel que décrit dans la revendication 2, dans lequel les moyens de couplage libres comprennent un ensemble articulé (29, 30) présentant des trous allongés (31, 32), et des broches d'accouplement (33, 34) engagées de manière coulissante dans ces trous allongés.

4. Robot industriel tel que décrit dans la revendication 1, dans lequel l'arbre rotatif est fixé à l'extrémité inférieure de l'ensemble formant le bras (13) du robot.

5. Robot industriel tel que décrit dans la revendication 1, dans lequel le bras pivotable est un bras inférieur qui porte à son extrémité un avant-bras (14).

EP 0 189 483 B1

# Fig. 1

1

EP 0 189 483 B1

Fig. 2

Fig. 3

Tilt Angle of the Lower Arm

—————— : Moment M1 due to the Lower Arm

---o--- : Moment -M1 due to the Balancer

EP 0 189 483 B1

# Fig. 4